# EUROPÄISCHE PATENTSCHRIFT

(11) **EP 0 527 361 B1**
(45) Veröffentlichungstag und Bekanntmachung des Hinweises auf die Patenterteilung: **05.10.1994**
(21) Anmeldenummer: 92112447.5
(22) Anmeldetag: 21.07.1992
(51) Int. Cl.: F16F 13/00

(54) **Hydraulisch dämpfendes Zweikammer-Motorlager**
Hydraulically damping dual-chamber engine mount
Support de moteur à double chambre et à amortissement hydraulique

(30) Priorität: 13.08.1991 DE 4126769
(43) Veröffentlichungstag der Anmeldung: 17.02.1993
(73) Patentinhaber: METZELER GIMETALL AG, D-80992 München (DE)
(72) Erfinder: Gugsch, Mathias, W-8000 München 40 (DE)
(74) Vertreter: Seibert, Hannelore

(56) Entgegenhaltungen:
- EP-A- 0 040 290
- DE-A- 3 024 089
- DE-A- 3 246 587
- FR-A- 2 605 694
- US-A- 4 756 513

## Beschreibung

Die Erfindung bezieht sich auf ein hydraulisch dämpfendes Zweikammer-Motorlager, dessen beide Kammern gummielastisch berandet sind und zwischen denen eine starre Zwischenplatte mit einem Überströmkanal und einer zentralen, starren Membran mit vorgegebenem vertikalem Freiweg zur Entkopplung hochfrequenter Schwingungen kleiner Amplituden angeordnet ist.
Mit einem solchen Lager sollen insbesondere niederfrequente Schwingungen gedämpft und hochfrequente Schwingungen, insbesondere akustische Schwingungen isoliert werden. Die Anforderungen bezüglich der Dämpfungs- und Isolationseigenschaften eines solchen Lagers bestehen u.a. darin, daß die erzielte Dämpfungswirkung und die erzielte Isolierwirkung unabhängig von einander optimiert werden können und daß die Dämpfungs- und Isolierwirkung von der Amplitude der eingeleiteten Schwingung abhängen.

Im Grundprinzip wird diese geforderte Wirkung durch das Parallelschalten von einem niederfrequent abgestimmten Kanal als Verbindungsöffnung zwischen Arbeits- und Ausgleichskammer erreicht und die hochfrequent abgestimmte Verbindungsöffnung durch eine Membran mit begrenztem Freiweg verschlossen und somit der Flüssigkeitsaustausch über diese Verbindungsöffnung auf ein bestimmtes Volumen, das bis zu null gehen kann, beschränkt.

Nach dem Stande der Technik wurde das Problem, eine Membran mit begrenztem Freiweg zu schaffen, auf unterschiedliche Weise gelöst, wie das beispielsweise in der EP 0040290 B 1 der DE 3024089 C 2 oder der DE 3246587 C 2 beschrieben ist. Dabei haben sich im wesentlichen zwei Lösungen herausgebildet, die wie folgt zusammengefasst werden können. Einmal auf Biegung beanspruchte Membranen, die sich durch ihre Geometrie in ihrer Federkennlinie progressiv verhalten oder durch Anschläge wie zum Beispiel einen Membrankäfig, in ihrem Freiweg begrenzt sind. Dazu zählen auch starre Membranplatten, die durch eine biegeweiches Gelenk aufgehängt sind. Bei dieser Art der Membranen ist die Amplitudentrennung zwischen hochfrequenten und niederfrequenten Schwingungen oftmals unzureichend, da bei größeren Amplituden, d.h. höheren Differenzdrücken zwischen den Flüssigkeitskammern die Durchbiegung dieser Membran ebenfalls zunimmt. Darüber hinaus sind bei einer Freiwegbegrenzung enge Fertigungstoleranzen erforderlich, die im Bereich von zehntel Milimetern liegen. Eine Freiwegbegrenzung durch Anschläge kann darüberhinaus zu Geräuschentwicklungen führen.

Eine weiter Möglichkeit der Gestaltung dieser Membran besteht im translatorisch bewegten Membranplatten, die freifliegend zwischen zwei Anschlägen eingefaßt sind. Bei derartigen Membranen sind die Fertigungstoleranzen noch kritischer, da zusätzlich zur Freiwegtoleranz noch die Durchmessertoleranz der Membran und des Membrankäfigs genau eingehalten werden muß. Außerdem ist durch Reibungseffekte eine Art Loslöseffekt zu beobachten, eine Kraft, die erst überwunden werden muß, bevor sich die Membran in ihrem Käfig frei bewegen kann.

Eine translatorisch bewegbare, aber starre Membran eines hydraulisch dämpfenden Zweikammer-Motorlagers gemäß Oberbegriff des Anspruchs 1 ist aus der US-A-4 756 513 bekannt. Dabei ist die starre Membran jedoch am Außenumfang von einem Gummiring ummantelt, der in einer entsprechenden Ausnehmung der die Membran umgebenden starren Zwischenplatte verschieblich gehaltert ist. Mit einer solchen Ausgestaltung der Membran werden zwar Klappergeräusche beim Anschlagen an die obere und die untere Begrenzung vermieden, bei einer entsprechend dichten Führung sind jedoch auch hier erhebliche Reibungskräfte zu überwinden, so daß diese Membran nur eine unzureichende leichte Beweglichkeit aufweist.

Ausgehend von dem vorstehend genannten Stand der Technik liegt der vorliegenden Erfindung die Aufgabe zugrunde, eine Membran mit begrenztem Freiweg zu schaffen, die einfach aufgebaut ist und bei der eine nahezu kraftfreie Bewegung möglich ist, d.h. eine Bewegung, die nur mit äußerst geringen äußeren Einwirkungen frei den eingeleiteten Schwingungen folgen kann.

Zur Lösung dieser Aufgabe ist erfindungsgemäß vorgesehen, daß zwischen der starren Membran und der diese ringfömrig umgebenden, starren Zwischenplatte ein ringförmiger, zu den Kammern hin offener Kanal mit ober- und unterseitig vermindertem Querschnitt zur Freiwegbegrenzung mittels Anschlägen vorgesehen ist, in dem auf der jeweiligen gegenüberliegenden Kanalwand die starre Membran auf mindestens einem Element kreisförmigen Querschnittes abrollt.

Durch diese rollende Lagerung der Membran wird eine freie Beweglichkeit derselben geschaffen, die nur sehr geringen Reibungskräften unterworfen ist. Der Aufbau selbst ist sehr einfach und die einzelnen Bauteile können durch günstige Fertigungsverfahren hergestellt werden, da die geforderten Toleranzen im üblichen Rahmen liegen.

Als besonders zweckmäßig hat es sich erwiesen, wenn das abrollende Elemente aus einem elastischen Ring besteht, der in den Kanal eingesetzt ist. Damit kann die Membran leicht auf dem Ring abrollen, wobei durch die verminderte Breite des Kanals ober- und unterseitig der Freiweg der Membran begrenzt ist.

Die abrollenden Elemente können aber auch aus elastischen Ringsegmenten, Zylinderrollen oder Kugeln bestehen.

Zweckmäßig ist es, wenn der Kanal parallele Wandungen aufweist, die ober- und unterseitig konisch zulaufend ausgebildet sind.

Es ist aber auch möglich, daß die Kanalwandungen gewölbt zueinander verlaufen. Dabei sollte der Krümmungsradius der Kanalwandungen mindestens doppelt so groß sein, wie der Radius der eingesetzten Elemente.

Insbesondere zur Erleichterung der Montage ist es zweckmäßig, wenn die Zwischenplatte horizontal geteilt ist. An Hand ein schematischen Zeichnung sind Aufbau und Funktionsweise eines Ausführungsbeispiels nach der Erfindung näher erläutert. Dabei zeigen
- Fig. 1: einen Querschnitt durch ein Motorlager mit Rollmembran
- Fig. 2: einen vergrößerten Auschnitt der Zwischenplatte mit der Rollmembran und
- Fig. 3: eine spezielle Gestaltung des Abrollkanals.

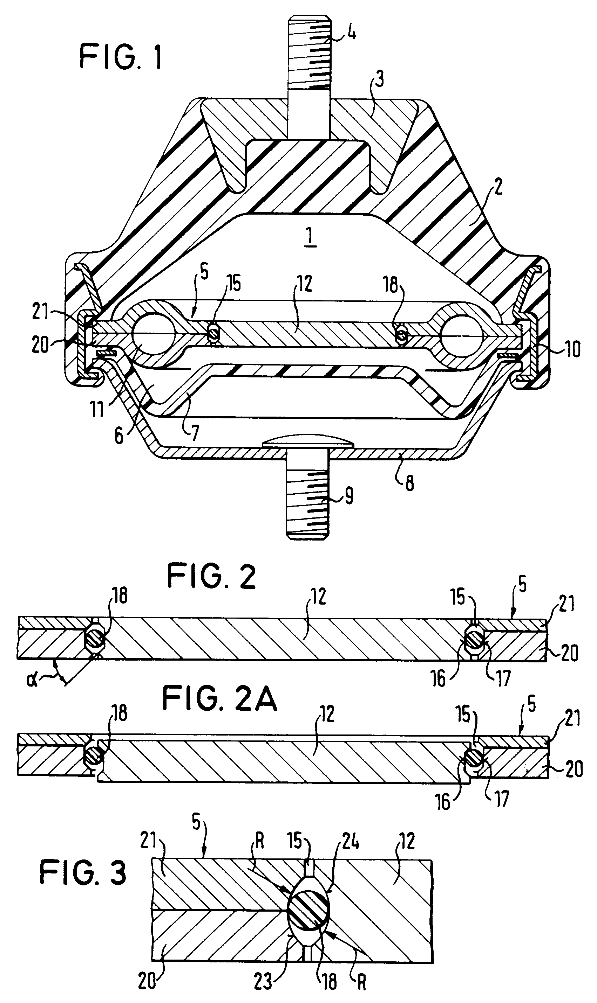

Figur 1 zeigt einen Längsschnitt durch ein Zweikammer-Motorlager, bei dem in herkömmlicher Weise die Arbeitskammer 1 von einer kegelstumpfförmigen Tragfeder 2 berandet ist, die oberseitig die Lagerplatte 3 mit einem Bolzen 4 zur Abstützung des Motors trägt. Unterhalb der Zwischenplatte 5 liegt die Ausgleichskammer 6, die von einer flexiblen Wandung 7 nach unter begrenzt ist. Tragfeder 2, Zwischenplatte 5 und Ausgleichskammer 7 werden zusammen mit der unteren topfförmigen Abschlußplatte 8, die über einen Bolzen 9 an der Karosserie festgelegt ist über einen Ringflansch 10 als Außenwandung zusammengehalten.

Die Zwischenplatte 5 weist in ihrem äußerem Umfangsbereich den Überstromkanal 11 auf, der über nicht dargestellte Überströmöffnungen eine Verbindung zwischen der Arbeitskammer 1 und der Ausgleichskammer 6 bildet und zur Dämpfung niederfrequenter Schwingungen großer Amplitude abgestimmt ist.

Zentral in der Zwischenplatte 5 ist nunmehr eine Rollmembran 12 gelagert, deren Ausbildung und Anordnung im Einzelnen und im vergrößerten Maßstab aus Figur 2 ersichtlich ist.

Zwischen der starren Membran 12 und der Zwischenplatte 5 ist ein Kanal 15 freigelassen, dessen Kanalwandungen 16 und 17 im mittleren Bereich parallel zueinander verlaufen und sich am oberen und unteren Ende unter einem vorgegeben Winkel alpha konisch verengen. In diesem Kanal 15 ist nunmehr ein elastischer Ring 18 eingesetzt, dessen Durchmesser der Breite des Kanals 15 entspricht oder aber auch geringfügig größer ausgebildet sein kann.

Bei der Einleitung von Schwingungen kann nunmehr die Membranplatte 12 frei nach oben und unten ausgelenkt werden, wobei der Ring 18 auf den Kanalwänden 16 und 17 nach oben bzw. nach unten rollt, sodaß sich in etwa eine untere Endstellung der Membran 12 ergeben kann, wie sie in Figur 2a dargestellt ist.

Wie sich aus der Zeichnung ergibt, ist die Rollbahn, d.h. die Kanalwandungen 16 und 17 von ihrer Geometrie her so ausgebildet, daß der Abrollweg und damit der Freiweg der Membran 12 begrenzt ist. Der Ring 18 übernimmt dabei die Abrollfunktion, dichtet die Membran 12 gegen die Zwischenplatte 5 ab, kann Fertigungstoleranzen ausgleichen und sorgt für einen weicheren Anschlag der Membran 12 in ihren Endstellungen.

Zweckmäßig ist es ferner, wenn die Zwischenplatte 12 zweiteilig ausgebildet ist und aus einem unterem Ringteil 20 und einem oberen Ringteil 21 besteht, wobei diese horizontale Teilung nicht unbedingt mittig erfolgen muß, wie man das auch aus Figur 2 ersieht. Durch diese Teilung wird auch die Montage wesentlich erleichtert, da zunächst auf die Membran 12 der Ring 18 aufgezogen und anschließend die Teile 20 und 21 der Zwischenplatte außen aufgesetzt werden.

Eine weitere Möglichkeit der Gestaltung des Kanals 15 ist in Figur 3 gezeigt. Dabei sind die Kanalwandungen 23 und 24 zueinander gewölbt ausgeführt und zwar zweckmäßigerweise mit einem Radius R, der mindestens doppelt so groß ist, wie der Radius des Ringes 18. Durch eine solche Gestaltung kann das Abrollverhalten des Ringes 18 und das Anschlagsverhalten der Membran 12 noch weiter beeinflußt werden.

Mit der beschriebenen Gestaltung ergibt sich also ein Zweikammer-Motorlager mit einer Membran zur Isolierung hochfrequenter Schwingungen kleiner Amplitude, wobei die Membran praktisch kraftfrei den eingeleiteten Schwingungen folgen kann und damit eine optimale Dämpfung bewirkt.

## Patentansprüche

1. Hydraulisch dämpfendes Zweikammer-Motorlager, dessen beide Kammern gummielastisch berandet sind und zwischen denen eine starre Zwischenplatte mit einem Überströmkanal und einer zentralen, starren Membran mit vorgegebenem vertikalem Freiweg zur Entkopplung hochfrequenter Schwingungen kleiner Amplitude angeordnet ist, dadurch gekennzeichnet, daß zwischen der starren Membran (12) und der diese ringförmig umgebenden, starren Zwischenplatte (5) ein ringförmiger, zu den Kammern (1, 6) hin offener Kanal (15) mit ober - und unterseitig vermindertem Querschnitt zur Freiwegbegrenzung mittels Anschlägen vorgesehen ist, wobei in dem Kanal (15) auf der an der Zwischenplatte (5) vorgesehenen Kanalwand (17; 24) die starre Membran (12) bei ihrer vertikalen Bewegung auf mindestens einem Element (18) kreisförmigen Querschnittes abrollt.

2. Zweikammer-Motorlager nach Anspruch 1, dadurch gekennzeichnet, daß das abrollende Element aus einem elastischen Ring (18) besteht.

3. Zweikammer-Motorlager nach Anspruch 1, dadurch gekennzeichnet, daß die Elemente aus elastischen Ringsegementen bestehen.

4. Zweikammer-Motorlager nach Anspruch 1, dadurch gekennzeichnet, daß die Elemente aus Zylinderrollen bestehen.

5. Zweikammer-Motorlager nach Anspruch 1, dadurch gekennzeichnet, daß die Elemente aus Kugeln bestehen.

6. Zweikammer-Motorlager nach Anspruch 1, dadurch gekennzeichnet, daß der Kanal (15) parallele Wandungen (16, 17) aufweist, die ober- und unterseitig konisch zulaufend ausgebildet sind.

7. Zweikammer-Motorlager nach Anspruch 1, dadurch gekennzeichnet, daß die Kanalwandungen (23, 24) gewölbt zueinander verlaufen.

8. Zweikammer-Motorlager nach Anspruch 7, dadurch gekennzeichnet, daß der Krümmungsradius der Kanalwandungen (23, 24) mindestens doppelt so groß ist wie der Radius der eingesetzten Elemente (18).

9. Zweikammer-Motorlager nach einem oder mehreren Ansprüche 1 bis 8, dadurch gekennzeichnet, daß die Zwischenplatte (5) horizontal geteilt ist.

## Claims

1. Hydraulically damping dual-chamber engine mount, whose two chambers are rubber-elastically edged and comprise between them a rigid intermediate plate with an overflow duct and a central, rigid diaphragm with a given vertical freedom of movement for decoupling high frequency vibrations of low amplitude, characterised in that an annular duct (15) is provided between the rigid diaphragm (11) and the rigid intermediate plate (5) annularly surrounding the rigid diaphragm, which annular duct (15) opens into the chambers (1, 6) and has a reduced cross section on its upper and lower sides to limit the freedom of movement by means of stops, the rigid diaphragm (11) rolling during its vertical movement upon at least one element (18) having a circular cross section in the duct (15) on the duct wall (17; 24) provided on the intermediate plate (5).

2. Dual-chamber engine mount according to claim 1, characterised in that the rolling element is formed by an elastic ring (18).

3. Dual-chamber engine mount according to claim 1, characterised in that the elements are made of elastic annular segments.

4. Dual-chamber engine mount according to claim 1, characterised in that the elements are formed by cylindrical rollers.

5. Dual-chamber engine mount according to claim 1, characterised in that the elements are formed by balls.

6. Dual-chamber engine mount according to claim 1, characterised in that the duct (15) comprises parallel walls (16, 17), which converge conically on the upper and lower sides.

7. Dual-chamber engine mount according to claim 1, characterised in that the duct walls (23, 24) converge in an arc.

8. Dual-chamber engine mount according to claim 7, characterised in that the radius of curvature of the duct walls (23, 24) is at least twice as great as the radius of the elements (18) used.

9. Dual-chamber engine mount according to one or more of claims 1 to 8, characterised in that the intermediate plate (5) is divided horizontally.

## Revendications

1. Support moteur à deux chambres à amortissement hydraulique, dont les deux chambres sont bordées par du caoutchouc élastique, et dans lequel entre ces deux chambres est disposée une plaque intercalaire rigide possédant un canal de trop-plein et une membrane centrale rigide comportant une course prédéterminée de libre déplacement vertical pour le découplage de vibrations à hautes fréquences et possédant une faible amplitude, caractérisé par le fait qu'entre la membrane rigide (12) et la plaque intercalaire rigide (5) entourant, sous la forme d'un anneau, cette membrane est prévu un canal annulaire (15), qui est ouvert en direction des chambres (1, 6) et possède une section transversale qui est réduite à sa partie supérieure et à sa partie inférieure et sert à limiter la course de libre déplacement, au moyen de butées, la membrane rigide (12) roulant, lors de son déplacement vertical, dans le canal (15), contre la paroi (17; 24) de ce dernier, qui est prévu sur la plaque intercalaire (5), sur au moins un élément (18) possédant une section transversale de forme circulaire.

2. Support moteur à deux chambres suivant la revendication 1, caractérisé par le fait que l'élément roulant est constitué par une bague élastique (18).

3. Support moteur à deux chambres suivant la revendication 1, caractérisé par le fait que les éléments sont constitués par des segments annulaires élastiques.

4. Support moteur à deux chambres suivant la revendication 1, caractérisé par le fait que les éléments sont constitués par des rouleaux cylindriques.

5. Support moteur à deux chambres suivant la revendication 1, caractérisé par le fait que les éléments sont constitués par des billes.

6. Support moteur à deux chambres suivant la revendication 1, caractérisé par le fait que le canal (15) possède des parois parallèles (16, 17), qui sont réalisées de manière à converger, selon une disposition conique, sur le côté supérieur et sur le côté inférieur.

7. Support moteur à deux chambres suivant la revendication 1, caractérisé par le fait que les parois (23, 24) du canal se rapprochent l'une de l'autre avec une forme cintrée.

8. Support moteur à deux chambres suivant la revendication 7, caractérisé par le fait que le rayon de courbure des parois (23, 24) du canal est au moins égal au double du rayon des éléments insérés (18).

9. Support moteur à deux chambres suivant une ou plusieurs des revendications 1 à 8, caractérisé par le fait que la plaque intermédiaire (5) est divisée horizontalement.
